# EUROPÄISCHE PATENTSCHRIFT

(11) **EP 2 288 857 B1**
(45) Veröffentlichungstag und Bekanntmachung des Hinweises auf die Patenterteilung: **16.01.2013**
(21) Anmeldenummer: 08774474.4
(22) Anmeldetag: 27.06.2008
(51) Int. Cl.: F24J 2/46, B08B 3/02, B08B 1/00

(54) **REINIGUNGSANLAGE UND VERFAHREN**
CLEANING SYSTEM AND METHOD
ÉQUIPEMENT DE NETTOYAGE ET PROCÉDÉ

(30) Priorität: 06.06.2008 DE 202008007802 U
(43) Veröffentlichungstag der Anmeldung: 02.03.2011
(73) Patentinhaber: Schneeweis, Herbert, 94360 Mitterfels (DE); Jäschke, Stefan, 94360 Mitterfels (DE)
(72) Erfinder: Schneeweis, Herbert, 94360 Mitterfels (DE); Jäschke, Stefan, 94360 Mitterfels (DE)
(74) Vertreter: Alber, Norbert
(86) Internationale Anmeldenummer: PCT/EP2008/058313
(87) Internationale Veröffentlichungsnummer: WO 2009/146753

(56) Entgegenhaltungen:
- EP-A- 1 693 120
- WO-A-2005/054672
- DE-A1- 19 523 549
- DE-U1- 29 503 688
- DE-U1-202007 006 491
- JP-A- 2004 186 632

## Beschreibung

### I. Anwendungsgebiet

Die Erfindung betrifft eine Reinigungsanlage gemäβ Anspruch 1 und ein Verfahren gemäβ Anspruch 16 für horizontale, schräg stehende und vertikale Flächen.

### II. Technischer Hintergrund

Dabei geht es um die Reinigung von Solarkollektoren, Solarmodulen zur Stromerzeugung oder auch anderen, insbesondere schräg stehenden Flächen, die nicht durch Schmutz bedeckt werden sollen. Eine typische Verschmutzung ist die Ablagerung von Laub oder größeren Mengen Staub in einer staubigen Umgebung, auch von Blütenstaub.

Gerade die Ablagerung von Staub auf solchen Flächen, die im folgenden beispielhaft ausschließlich nur noch als Solarmodule bezeichnet werden, ohne die Erfindung hierauf zu beschränken stellen für die Betreiber von Solarmodulen und Sonnenkollektoren ein großes Problem dar, da sie die Sonneneinstrahlung auf die Solarmodule behindern und damit die Stromproduktion reduzieren.

Die Betreiber haben daher ein starkes Interesse, die Ablagerungen auf Solarmodulen schnell und zuverlässig zu beseitigen.

Dies geschah in der Vergangenheit meist manuell durch Abkehren. Auch automatische Kehrvorrichtungen sind bereits bekannt, die betätigt werden können, ohne einen Bediener auf das Dach beziehungsweise die Solarmodule steigen zu lassen.

Darüber hinaus sind Reinigungsanlagen bekannt, bei denen eine Reinigungsflüssigkeit aus einem Rohr, welches quer über die zu reinigende Fläche verläuft, aufgesprüht wird, meist Wasser mit einem Reinigungszusatz.

Das Sprührohr befindet sich dabei stationär an der Oberkante der schrägen Fläche oder wird entlang der schrägen Fläche mittels einer Antriebsvorrichtung wie etwa einer umlaufenden Kette bewegt, um ein besseres Reinigungsergebnis bei geringerem Verbrauch an Reinigungsmitteln zu erreichen.

Diese Lösungen weisen jedoch spezifische Nachteile auf, insbesondere dann, wenn an derartigen Flächen, insbesondere aus Solarmodulen bestehenden Fläche, eine Reinigungsanlage nachgerüstet werden soll.

Die bekannten Anlagen sind technisch relativ aufwendig und auch wartungsintensiv und können an unterschiedliche vorgegebene zu reinigende Flächen nur schlecht angepasst werden.

Dies ergibt einen hohen Herstellungs-, Montage- und Wartungsaufwand, der den Zuwachs an Stromertrag, wie er durch die Reinigung bewirkt werden soll, kompensiert.

Ebenso bewirkt die vor allem durch die Antriebsvorrichtung für eine solche Reinigungsanlage bewirkte geringfügige zusätzliche Beschattung ebenfalls einen Minderertrag.

Ein weiteres Problem ist, dass die Reinigung von Staub gerade bei Solarmodulanlagen in Gegenden besonders notwendig ist, in denen das meist zur Reinigung verwendete Wasser nicht in beliebigen Mengen, d. h. nur zu einem hohen Preis und gegebenenfalls auch in schlechter Qualität, zur Verfügung steht.

Aus dem deutschen Gebrauchsmuster DE2020070064914 ist bereits eine gattungsgemäße Reinigungsanlage bekannt, bei der die Zugseile zum Antreiben des Arbeitsrohres entweder abwechselnd auf am oberen und unteren Rand der Arbeitsfläche vorhandene Wickelrollen aufgewickelt werden, oder nach Umlenkung über eine Umlenkrolle an der einen Seite auf eine gemeinsame Wickelrolle am anderen Ende aufgewickelt werden, dort jedoch jeweils am oder knapp außerhalb der Enden des Arbeitsrohres, so dass die Länge der Wickelwelle der des Arbeitsrohres angepasst sein muss.

Aus der EP 1 693 120 A ist ferner eine Reinigungsanlage bekannt, bei der ein Besen entlang der Arbeitsfläche bewegt wird und bei der zusätzlich auch Wasser auf die Arbeitsfläche ausgebracht werden kann.

Ebenso zeigt die JP 2004 186632 A eine Reinigungsanlage, bei der ein Besen entlang der Arbeitsfläche bewegt wird, und darüber hinaus ein Sprührohr zum Ausbringen von Reinigungsflüssigkeit auf die Arbeitsfläche vorhanden ist. Das Sprührohr ist hierbei ortsfest, bei einer dachförmigen Arbeitsfläche am First des Daches, montiert.

### III. Darstellung der Erfindung

### a) Technische Aufgabe

Es ist daher die Aufgabe gemäß der Erfindung, eine Reinigungsanlage zu schaffen, die einfach und kostengünstig aufgebaut ist, an unterschiedliche Verhältnisse der zu reinigenden Fläche leicht angepasst werden kann und einen möglichst geringen Verbrauch an Reinigungsfluid sowie geringe Wartungskosten hat.

### b) Lösung der Aufgabe

Diese Aufgabe wird durch die kennzeichnenden Merkmale der Ansprüche 1 und 16 gelöst. Vorteilhafte Ausführungsformen ergeben sich aus den Unteransprüchen.

Die zu reinigende Fläche besteht aus einzelnen Flächenmodulen, aus denen sie zusammengesetzt ist, meist gleichmäßigen, rechteckigen Modulen, die rasterartig aneinandergereiht sind, so dass durchgehende Längs- und/oder Querfugen bzw. Kontaktkanten entstehen.

Dies ist auch der Fall, wenn es sich bei den Flächenmodulen um Solarmodule handelt und die einzelnen Solarmodule in aller Regel entlang ihres Randes von einem Rahmen oder einer Einfassung zusammengehalten sind, die dann entweder unter Bildung eines Abstandes, also einer Fuge, nebeneinander liegen oder bis auf Anlage gegeneinander geführt sind.

Indem diejenigen Teile der Antriebsvorrichtung, die von der einen zur anderen Seite der Solarmodulfläche verlaufen müssen, entweder in vorhandenen Fugen zwischen den einzelnen Modulen angeordnet sind, oder - falls solche Fugen wegen des dichten Aneinandersetzens der Module nicht vorhanden sind - zumindest in der Aufsicht betrachtet - oberhalb der gegeneinander stoßenden Rahmen oder Einfassungen der einzelnen Module verlaufen - sofern sie nicht außerhalb der Gesamtfläche der Module angeordnet werden können - wird die zwangsweise Beschattung, die durch diese Teile der Antriebsvorrichtung bewirkt wird, von ihren Auswirkungen sehr gering gehalten, da die Solarzellen im Bereich ihrer Rahmen bzw. Einfassungen in aller Regel keinen Strom produzieren, sondern dieser Rahmen nur der mechanischen Stabilisierung und dem Zusammenhalten des Schichtaufbaus dient.

In dem diese Teile der Antriebsvorrichtung Seile oder andere sehr dünne, flexible Zugelemente sind, die an dem Arbeitsrohr angreifen, wird der Schattenwurf auf die Solarmodule zusätzlich sehr gering gehalten, da es sich bei den Seilen beispielsweise um nur 1 mm bis 3mm dicke Stahlseile oder Kunststoffseile handelt.

Die Zugseile ihrerseits werden nicht wie bei solchen Zugelementen üblich als endloses Seil über eine obere und eine untere Umlenkrolle geführt, von denen eine angetrieben wird, denn eine solche Lösung erfordert eine, über sämtliche Zugseile, die am Arbeitsohr angreifen, exakt synchrone Bewegung.

Da die Arbeitsrohre sich über eine Länge von 10m, 20m und auch mehr erstrecken können, greifen über diese Länge verteilt eine ganze Reihe von Zugseilen am Arbeitsrohr an.

Außerhalb der Gesamtfläche der Module können auch Seitenführungen parallel zur Verlaufsrichtung dieser Zugseile angeordnet werden, die entweder die Zugseile oder die seitlichen Enden des Arbeitsrohres selbst bzw. die daran befestigten Schlitten in seitlicher Richtung führen.

Um eine exakt synchrone Bewegung dieser Zugseile zu realisieren, müssten dann die oberen Umlenkrollen einerseits und die unteren Umlenkrollen andererseits über eine durchgehende Welle mechanisch miteinander verbunden werden, da eine z. B. elektronische Synchronisierung noch wesentlich aufwendiger ist. Erfindungsgemäß wird zur Vermeidung dieser dann sehr langen und an die jeweilige Gesamtfläche anzupassenden Welle, auf denen die Umlenkrollen sitzen, vorgeschlagen, die Zugseile als endliche Zugseile auszugestalten und mit dem vom Arbeitsrohr abgewandten Ende jeweils auf einer Wickelwelle aufzuwickeln, durch deren Auf- oder Abwickeln das Bewegen des Arbeitsrohres bewirkt wird.

Wenn dabei eine solche Wickelwelle nur auf einer Seite der vom Arbeitsrohr zu überstreichenden Arbeitsfläche vorhanden ist, auf der die freien Enden aller Zugseile aufgewickelt werden und die noch dazu kürzer ist als die dazu parallele Erstreckungsrichtung der zu reinigenden Fläche, so wird dadurch der Herstellungs- und Montageaufwand drastisch reduziert.

Zum einen muss die Länge der Wickelwelle nicht an die konkrete Abmessung der zu reinigenden Fläche jeweils neu angepasst werden.

Zum anderen gestaltet sich die Montage sehr viel einfacher, da die Wickelwelle samt sie antreibendem Motor nur auf einer Seite montiert werden muss und damit in einer vormontierten Baugruppe angeliefert werden kann.

Auf der gegenüberliegenden Seite der zu reinigenden Fläche, also der Arbeitsfläche, ist lediglich die Anordnung von Umlenkrollen für dorthin gerichtete Zugseile notwendig.

An dieser Stelle darf auch klargestellt werden, dass mit dem Begriff Arbeitsfläche diejenige Fläche gemeint ist, die von dem Arbeitsrohr bei Ausnutzen seines maximalen Verfahrweges überstrichen wird.

Diese Arbeitsfläche stimmt in aller Regel weitgehend mit der zu reinigenden, aus Modulen zusammengesetzten, Gesamtfläche überein und wird in der Praxis nur in wenigen Fällen geringfügig größer als die zu reinigende Fläche gewählt werden. Sie wird jedoch in aller Regel auch nicht kleiner als die reinigende Fläche sein, vor allem deshalb, um die an den Rändern der Arbeitsfläche zu führenden Zugseile, die an den Enden des Arbeitsrohres angreifen, außerhalb der zu reinigenden Fläche führen zu können, so dass diese Elemente der Antriebsvorrichtung bereits kein Beschattungsproblem mehr auslösen.

Der Antrieb der Zugseile mittels Wickelwellen bewirkt ferner, dass in aller Regel kein Längenausgleich für die Zugseile eingebaut werden muss, wie dies bei endlos über Umlenkrollen geführten Seilen notwendig ist, die nur dann mit der nötigen Vorspannung an den Umlenkrollen anliegen, von denen sie in der Regel nur mittels Haftreibung angetrieben werden, während bei der Lösung mit Wickelwellen eine fixe Verbindung der Enden der Zugseile mit der Wickelwelle vorhanden ist.

Die Führung der Zugseile im mittleren Bereich in den Nuten zwischen den Modulen bewirkt - neben dem Wegfall eines Beschattungsproblems - vor allem gleichzeitig eine zuverlässige Seitenführung dieser Zugseile durch die Wände der Nut, ohne dass hierfür zusätzliche Führungen angebaut werden müssen. Außerdem schützt sie das Zugseil vor einem seitlichen Verlagern beispielsweise bei starkem Wind und damit auch vor entsprechenden, vom Wind verursachten, Bewegungen des Arbeitsrohres selbst, welches zusätzlich durch die unterhalb der Ebene des Arbeitsrohres in den Nuten geführten Zugseile gegen die Oberseite der zu reinigenden Solarmodule gezogen werden, auf deren Rahmen bzw. Seiteneinfassungen sie mittels einem Gleitschlitten, Rollen oder ähnlichem, laufen.

Beim Aufwickeln der Zugseile auf einer Wickelwelle oder Wickelrolle besteht zusätzlich das Problem, dass sich beim mehrlagigen Bewickeln der wirksame Durchmesser ändert und damit bei gleicher Drehzahl die Zuglänge des Seiles.

Um dies zu verhindern und das synchrone Ziehen aller Zugseile sicherzustellen, umfasst die Antriebsvorrichtung eine Verschiebevorrichtung in Verlaufsrichtung der Wickelwelle bezüglich der Seilbewicklung, um eine immer nur einlagige Bewicklung der Wickelwelle mit den Seilen sicherzustellen.

Eine Möglichkeit besteht darin, als Verschiebevorrichtung eine Gewindespindel sowie darauf laufende Spindelmuttern zu verwenden, von denen eine von beiden axialfest fixiert ist und das andere Element sich entsprechend der Steigung des Gewindes mit zunehmender Umdrehungszahl axial verschiebt.

Die Gewindesteigung, also die Axialbewegung bei einer Umdrehung, wird dabei mindestens so groß gewählt, wie die Breite des Zugelementes, dass dadurch immer neben der vorherigen Windung des Zugelementes auf der Wickelwelle abgelegt wird.

Das bewegliche Element der Spindel-/Spindelmutter-Paarung kann dabei beispielsweise mit der Wickelwelle gekoppelt sein, insbesondere kann die Spindel einstückig zusammen mit der Wickelwelle ausgebildet sein und an einer deren Enden angeordnet werden.

Eine andere Lösung besteht darin, auf dem beweglichen Teil der Verschiebevorrichtung die jeweils letzen Umlenkrollen, mit denen die einzelnen Zugseile auf die Wickelwelle geführt werden, zu beaufschlagen, um den gleichen Effekt bei einer axial nicht beweglichen Wickelwelle zu bewirken.

An dem Arbeitsrohr greifen Seile, die einerseits in Arbeitsrichtung und andererseits auch in die Gegenrichtung abstreben, vorzugsweise nur an den Enden des Arbeitsrohres an.

Wenn bei einer schrägstehenden Fläche das Arbeitsrohr horizontal verlaufend, also vor der Fläche, angeordnet ist und entlang der Schrägstellung in einem vorzugsweise immer gleichen Abstand aufwärts und abwärts geführt wird, wobei die Abwärtsrichtung in aller Regel die Arbeitsrichtung ist, kann es notwendig sein, im mittleren Bereich am Arbeitsrohr ein oder mehrere, vorzugsweise nur nach oben abstrebende Zugseile anzuordnen, um das Arbeitsrohr daran im mittleren Bereich aufzuhängen und ein Durchhängen des Arbeitsrohres aufgrund seines Eigengewichtes zu verhindern.

Dies ist in den meisten Fällen sinnvoller als das Arbeitsrohr so groß und stabil auszubilden, dass keine Durchbiegung mehr auftreten kann, da dies wiederum - neben der Erhöhung der Materialkosten und damit des Herstellungspreises - auch den Beschattungseffekt vergrößern würde.

Ein Verfahren von oben nach unten und umgekehrt des Arbeitsrohres ist dann sinnvoll, wenn die schräg stehende Fläche relativ hoch ist, jedoch nur eine begrenzte, nicht allzu große Breite besitzt, die mit einem einzigen Arbeitsrohr und damit einer einzigen Reinigungsanlage überspannt werden kann.

Es gibt jedoch auch zu reinigende Flächen, die eine wesentlich größere Breite besitzen, beispielsweise eine Breite von mehreren hundert Metern, bei denen dies nicht möglich ist.

Dann können erfindungsgemäß zwei unterschiedliche Bauformen gewählt werden:
a)
   Entweder ist die Erstreckungslänge der Fläche in Schrägstellungsrichtung, also in der Höhe, nur so groß, dass das Arbeitsrohr vom unteren zum oberen Ende der schräg stehenden Fläche durchgehend parallel zu der Fläche angeordnet werden kann und die Zugseile dann horizontal entlang der Arbeitsfläche verlaufen.
   Die motorisch angetriebene Wickelwelle befindet sich dann wiederum außerhalb der zu reinigenden Fläche, diesmal seitlich außerhalb einer der schräg ansteigenden Seitenkanten, während dies bei der zuvor beschriebenen Lösung in der Regel oberhalb der Oberkante war.
   Aus später erläuterten Gründen wird jedoch bei einer Querverfahrung des Arbeitsrohres das Arbeitsrohr vorzugsweise nicht im rechten Winkel zu seiner Bewegungsrichtung angeordnet, sondern schräg dazu, sodass in Arbeitsrichtung das obere Ende des Arbeitsrohres weiter vorne liegt als das untere Ende.
   Auch hier werden zumindest an den beiden Enden des Arbeitsrohres Zugseile sowohl in Arbeitsrichtung als auch die Gegenrichtung abstrebend angreifen, um damit das Arbeitsrohr in beide Richtungen bewegen zu können, je nach Antriebsrichtung der Wickelwelle.
   Die Enden beider Zugseile, also sowohl die in Arbeitsrichtung weisenden Zugseile 9 als auch die in Gegenrichtung weisenden Zugseile, sind auf der gleichen Wickelwelle aufgewickelt, jedoch in unterschiedliche Wickelrichtungen und an unterschiedlichen, nebeneinander liegenden Längsabschnitten der Wickelwelle.
   Sofern die Länge des Arbeitsrohres bei einer solchen Lösung zu groß ist, um dazwischen keine Zugseile zur Stabilisierung zu benötigen, werden im mittleren Bereich des Arbeitsrohres bei einem in der Aufsicht betrachtet genau lotrecht stehenden Arbeitsrohr Zugseile angeordnet, die sowohl in Arbeitsrichtung als auch in Gegenrichtung abstreben.
   Je mehr das Arbeitsrohr jedoch wie vorher erwähnt schräg gestellt gegenüber der Querrichtung zur Bewegungsrichtung ist, umso stärker wirken auch hier die Gewichtskräfte des Arbeitsrohres auf dieses ein. In diesen Fällen ist das Anordnen von Zugseilen, die ausschließlich entgegen der Arbeitsrichtung gerichtet sind, im mittleren Bereich durchaus sinnvoll.
b)
   Falls jedoch die Abmessungen der zu reinigenden Fläche in der Höhe zu groß sind, um diese von einem Arbeitsrohr überdecken zu können, besteht die andere Alternative darin - wie eingangs beschrieben - ein horizontales Arbeitsrohr auf und ab entlang der zu reinigenden Fläche zu verfahren, wobei die Länge dieses Arbeitsrohres wesentlich geringer ist als die Breite der zu reinigenden Fläche.

Für diesen Fall kann die gesamte Reinigungsanlage auf Querschienen, die oberhalb der Oberkante und unterhalb der Unterkante der zu reinigenden Fläche verlaufen, verfahren werden, also oberhalb der Wickelwelle mit dem antreibenden Motor und allen dortigen Umlenkrollen und auf der der gegenüberliegenden Seite die dort vorhandenen Umlenkrollen und natürlich auch alle benötigten Zuführungsleitungen etc., so dass die gesamte Reinigungsanlage in Querrichtung verfahren werden kann und abschnittweise nacheinander die verschiedenen, nebeneinander liegenden Breitenbereiche der Fläche nacheinander reinigt, bis die gesamte Fläche gereinigt ist.

Unabhängig von den nun beschriebenen Bauformen wird die Wickelwelle in aller Regel mittels eines Elektromotors angetrieben, der insbesondere als Rohrmotor ausgeformt ist und sich vorzugsweise im Inneren der hohlen Wickelwelle an einem ihrer Enden befindet und dort in aller Regel drehfest, aber auch axialfest, in der Welle angeordnet ist.

Die Antriebsvorrichtung sollte ferner eine Parkposition für das Arbeitsrohr außerhalb der zu reinigenden Fläche, also vorzugsweise nahe an der Wickelwelle, aufweisen, in der das Arbeitsrohr über seine Länge verteilten U-förmigen oder C-förmigen Parkaufnahmen formschlüssig aufgenommen ist und auch bei starkem Wind nicht in Querrichtung ausgelenkt werden kann.

Zum Schutz sowohl der Antriebseinrichtung als auch des Arbeitsrohres - welches in aller Regel nicht permanent, sondern nur periodisch eingesetzt wird - sind sowohl die Wickelwelle mit dem Motor als auch die Parkposition des Arbeitsrohres in einem Schutzgehäuse aufgenommen, welches sich ebenfalls außerhalb der einen Endkante der zu reinigenden Fläche befindet und so lang ist wie das gesamte Arbeitsrohr, um dieses mit einer offenen Endkante zur zu reinigenden Fläche hin aufnehmen zu können, die gegebenenfalls durch eine bewegliche Klappe weitestgehend - bis auf Durchlässe für die Zugseile - auch verschlossen werden kann.

Das Arbeitsrohr ist dabei in aller Regel als Sprührohr ausgebildet, so dass ein z. B. über eine flexible Schlauchleitung an einem oder beiden Enden des Arbeitsrohres angeliefertes Reinigungsfluid durch die Arbeitsöffnungen des Sprührohres, die regelmäßig über dessen Länge verteilt sind, auf die Oberseite der zu reinigenden Fläche ausgebracht wird und dort entlang der zu reinigenden Fläche nach unten fließt und dabei auf den Solarmodulen vorhandene Verschmutzungen wegschwemmt.

Dementsprechend wird das Reinigungsfluid vorzugsweise mit Druck auf die Oberfläche der Solarmodule ausgebracht, wobei in den Sprühöffnungen vorzugsweise spezielle Düsen, insbesondere Fächerdüsen, angeordnet sind, die trotz Ausbringen des Reinigungsfluids über eine vergleichsweise große Breite betrachtet in Längsrichtung des Arbeitsrohres mit einem möglichst geringen Mengenverbrauch auskommen.

Als Reinigungsfluid wird dabei vorzugsweise eine Flüssigkeit, beispielsweise Wasser, verwendet.

Jedoch ist auch die Verwendung eines Gases als Reinigungsfluid möglich, sofern es schwerer als Luft ist und entlang der Oberseite der Solarzellen strömt, denn nur durch diese Anlage an der Oberseite ist eine Mitnahme der dort vorhandenen Verschmutzungen gewährleistet, die umso besser funktioniert, je schwerer das Reinigungsfluid ist.

Beispielsweise hat sich hier Kohlendioxid als kostengünstiges Reinigungsgas bereits bewährt.

Zusätzlich kann das Reinigungsfluid mit einer Temperatur, die unterhalb der Umgebungstemperatur und insbesondere unterhalb der Temperatur der zu reinigenden Solarzellen liegt, ausgebracht werden, was gleichzeitig einen vorübergehenden Kühlungseffekt für die Solarmodule bewirkt.

Unabhängig vom verwendeten Reinigungsfluid muss darauf geachtet werden, dass dieses auf den Oberseiten der Solarzellen keine unerwünschten Ablagerungen hinterlässt, wie beispielsweise Kalkablagerungen bei Verwendung von kalkhaltigem Wasser.

Sofern Wasser verwendet wird, muss es sich dabei um kalkfreies Wasser, beispielsweise entkalktes Wasser oder Regenwasser, handeln.

Je nach Beschaffungskosten des Reinigungsfluids wird es sich lohnen, dieses Reinigungsfluid am unteren Ende der zu reinigenden Fläche wieder aufzufangen, zu reinigen und erneut zu benutzen, selbst wenn dies nicht mit 100% des Reinigungsfluids möglich ist.

Einen Spezialfall eines gasförmigen Reinigungsfluids stellt Druckluft dar, denn diese ist nicht wie zuvor gefordert schwerer als Luft.

Die Reinigungswirkung von Druckluft besteht jedoch auch nicht in dem Abgleiten entlang der Oberseite der Reinigungsflächen, sondern in dem Auftreffen auf der Oberfläche mit großem Druck und das Mitreißen bzw. Wegreißen dort vorhandener Staubpartikel mit dem von der Oberfläche der Solarzellen abprallenden Druckluftstrom.

Der Vorteil von Druckluft liegt darin, dass zum einen keinerlei dadurch bedingte Rückstände auf den Solarzellen zu befürchten sind und das vor allem Druckluft zur Herstellung lediglich Energie, beispielsweise elektrischen Strom, erfordert und keine anderen Ressourcen wie etwa Wasser, welches gerade in staubreichen Gegenden häufig nicht in ausreichender Menge oder Qualität zur Verfügung steht.

Der Nachteil der Druckluft besteht darin, dass sie nach dem Zurückprallen von der Oberfläche der Solarmodule die weiter unten auf den Solarmodulen liegenden Staubpartikel nicht mehr mitnimmt, sondern im wesentlichen nur die im unmittelbaren Auftreffbereich des Druckluftstromes auf der Solarzellenoberfläche befindlichen Staubpartikel.

Zum einen wird dies durch die Bewegung des Arbeitsrohres ausgeglichen. Zum anderen kann der Nachteil des Hochwirbelns der Staubpartikel und des sich in der Folge wiederum teilweisen Ablagerns auf den Oberflächen der Solarzellen dadurch begegnet werden, dass gleichzeitig mit dem Druckluftbeaufschlagen der aufgewirbelte Staub mittels eines Arbeitsrohres in Form eines Saugrohres abgesaugt wird, wobei sich das Saugrohr in Arbeitsrichtung vor dem mit Druckluft arbeitenden Sprührohr befinden muss.

Dies bedeutet zwar auf den ersten Blick einen Mehraufwand, jedoch sollte nicht übersehen werden, dass das Absaugen mittels eines Saugrohres, dessen Länge der des Arbeitsrohres entspricht, auch zusätzlich als erster Grobreinigungsschritt zum einem reinen Absaugen ohne Druckluftbeaufschlagung und ohne Aufbringen von Reinigungsfluid benutzt werden kann, was den Bedarf an Reinigungsfluid weiter senkt und das Reinigungsergebnis verbessern kann.

Anstelle eines Absaugens als Vorreinigung können stattdessen oder auch ergänzend weitere Vorreinigungsschritte vorgesehen werden, beispielsweise das Abkehren mit einem Besen, der ebenfalls am Arbeitsrohr angeordnet werden kann.

Somit stehen mit einem entsprechend multifunktional ausgestatten Arbeitsrohr mehrere Reinigungsverfahren zur Verfügung, beispielsweise:
- Erster Schritt:: Abkehren, mit oder ohne gleichzeitigem Absaugen,
- Zweiter Schritt:: Abblasen mittels Druckluft, wiederum mit oder ohne gleichzeitigem Absaugen,
- Dritter Schritt:: Reinigen mittels einer Reinigungsflüssigkeit wie etwa Wasser, unter Umständen zur gleichzeitigen Kühlung,
oder:
- Abkehren, mit oder ohne gleichzeitigem Absaugen,
- Reinigen mittels einer Reinigungsflüssigkeit wie etwa Wasser, unter Umständen zur gleichzeitigen Kühlung,
oder:
- Abblasen mittels Druckluft, wiederum mit oder ohne gleichzeitigem Absaugen,
- Reinigen mittels einer Reinigungsflüssigkeit wie etwa Wasser, unter Umständen zur gleichzeitigen Kühlung.

Eine Reinigung in solchen mehreren Schritten kann mittels ein und derselben Reinigungsanlage durchgeführt werden, vor allem, wenn zu diesem Zweck das Arbeitsrohr entsprechend ausgebildet ist.

So können zu einem Arbeitsrohr mehrere Einzelrohre zusammengefasst werden, die einerseits der Zuführung von Reinigungsflüssigkeit, andererseits der Zuführung von Druckluft und des Weiteren dem Abführen von Saugluft dienen.

Insbesondere kann dies realisiert werden, indem in ein und demselben Arbeitsrohr, welches in der Regel ein Hohlprofil ist, mehrere Kammern nebeneinander angeordnet sind, die diese Funktionen einzeln erfüllen.

Natürlich müssen dann in jeder Kammer separate Arbeitsöffnungen, also Sang öffnungen oder Sprühöffnungen, angeordnet werden.

Um die optimale Ausbringungsrichtung bzw. Saugrichtung der einzelnen Arbeitsöffnungen gegen die Oberfläche der Solarzellen bei jedem Arbeitsschritt zu gewährleisten, kann das Arbeitsrohr um seine Längsachse auch schwenkbar ausgebildet sein, damit die jeweils im Einsatz befindlichen Arbeitsöffnungen die momentan optimale Neigung gegenüber der zu reinigenden Fläche einnehmen.

Durch diese Schwenkbewegung kann ferner auch ein an dem Arbeitsrohr über dessen gesamte Länge angeordneter Besen wahlweise mit den freien Enden seiner Borsten in Kontakt oder außer Kontakt mit der Oberfläche der zu reinigenden Fläche gebracht werden.

Die Schwenkbewegung des Arbeitsrohres kann durch einfache Anschläge am oberen und unteren Ende des Bewegungsweges des Arbeitsrohres erreicht werden, die auf entsprechend radial vorstehende Fortsätze des Arbeitsrohres einwirken und dieses von der einen in die andere Endstellung ihrer Schwenkbewegung bewegen, die beispielsweise durch Federn als Über-Totpunkt-Schwenkbewegung ausgebildet ist.

Als Zugelement zum Bewegen des Arbeitsrohres bzw. Sprührohres kann ebenso gut anstatt eines separaten Zugseiles der das Sprührohr mit Reinigungsfluid versorgende Schlauch benutzt werden, der dann insbesondere ebenso wie das bisher beschriebene Zugseil auf eine Wickelwelle aufgewickelt und insbesondere durch entsprechende Verschiebevorrichtung nur einlagig aufgewickelt wird.

Dabei kann der Schlauch wie die Zugseile entweder nur in einer Richtung an dem Sprührohr angreifen oder sowohl für die Vorwärts- als auch Rückwärtsrichtung daran angreifen.

### c) Ausführungsbeispiele

Ausführungsformen gemäß der Erfindung sind im Folgenden beispielhaft näher beschrieben. Es zeigen:
- Fig. 1a:: Eine Aufsicht auf eine erste Bauform der Reinigungsanlage,
- Fig. 1b,c:: Detail dasbellungen
- Fig. 2:: eine perspektivische Ansicht der gleichen Reinigungsanlage,
- Fig. 3:: eine Seitenansicht der auf einem Dach aufgebauten Reinigungsanlage,
- Fig. 4:: eine Erweiterung der ersten Bauform,
- Fig. 5:: eine in Querrichtung verfahrende Reinigungsanlage,
- Fig. 6a, b:: Detaildarstellungen des Arbeitsrohres,
- Fig. 6c:: eine Darstellung der Lösung mit mehreren Arbeitsschritten, und
- Fig. 7:: eine Darstellung dieser mehreren Arbeitsschritte.

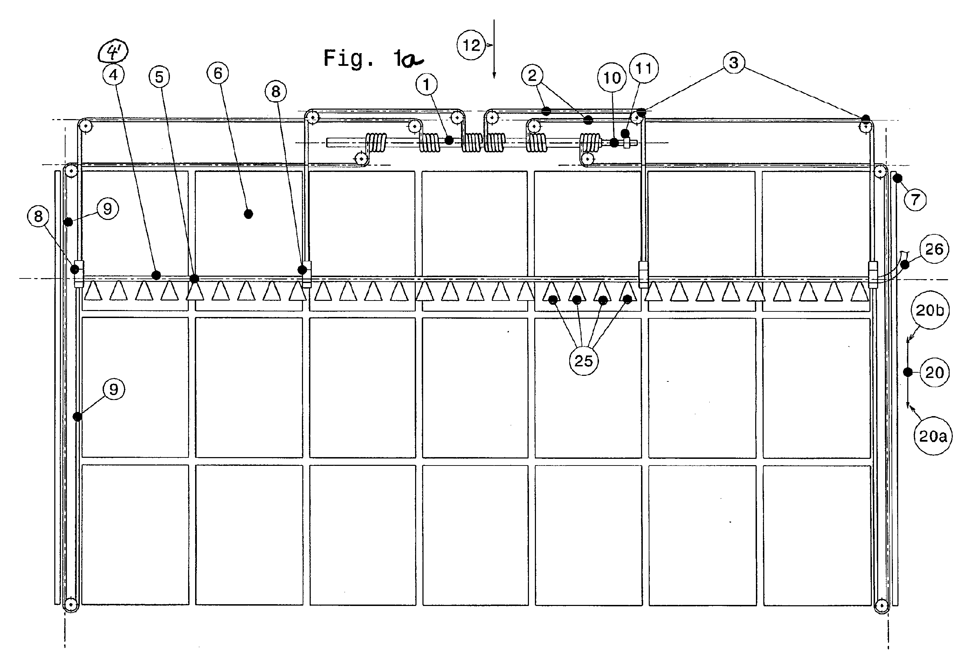

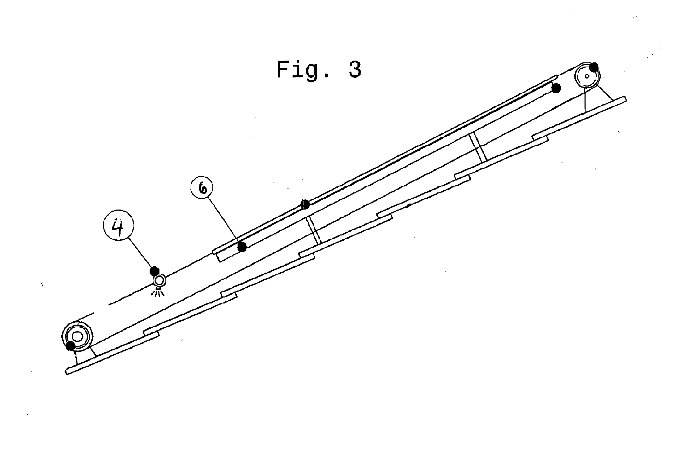

Die Figuren 1a, 2 und 3 zeigen eine erste Bauform der erfindungsgemäßen Reinigungsanlage in Aufsicht auf die Fläche, perspektivische Ansicht sowie Seitenansicht, letzteres also betrachtet in horizontaler Verlaufsichtung der zu reinigenden Fläche.

Die zu reinigende Fläche setzt sich aus rechteckigen, jeweils gleichgroßen, in horizontalen Reihen nebeneinander und Spalten übereinander anschließenden Solarmodulen 6 zusammen, die insgesamt von der Reinigungsanlage gereinigt werden soll.

Zu diesem Zweck verläuft von der linken zur rechten Kante der zu reinigenden Fläche durchgehend ein Arbeitsrohr - hier dargestellt als Sprührohr 4 - horizontal knapp vor bzw. oberhalb dieser schräg gestellten Fläche, welches mit Hilfe von Zugseilen im gleichbleibenden Abstand zur Oberseite der zu reinigenden Fläche in Bewegungsrichtung 20 bewegt wird, wobei die Abwärtsrichtung die Arbeitsrichtung 20 a ist, in der gesprüht wird, und die Aufwärtsrichtung die Gegenrichtung 20b, um das Sprührohr 4 in zurück in die Ausgangslage zu bringen.

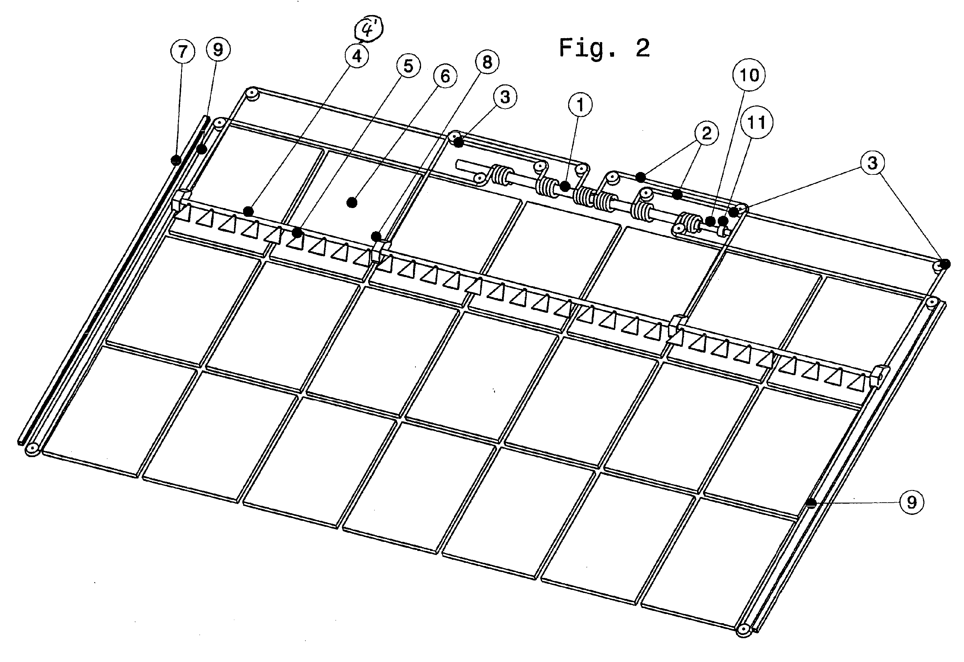

Wie am besten die Figuren 1a und 2 zeigen, sind entlang der Verlaufsrichtung des Sprührohres 4 in vorzugsweise gleichmäßigen Abständen Sprühdüsen 5 darin angeordnet, so dass das daraus austretende Reinigungsfluid 25 fächerförmig oder kegelförmig austritt und gegen die Oberseite der Solarmodule 6 gerichtet ist, wobei sich die Fächer bzw. Kegel des austretenden Reinigungsfluides spätestens beim Auftreffen auf den Solarmodulen 6 gegenseitig erreichen oder gar überlappen.

Um den Verbrauch an Reinigungsfluid 25 gering zu halten, sind die Sprühdüsen 5 vorzugsweise Fächerdüsen, die einen Sprühfächer an einer Ebene ausbringen, der von dem Sprührohr 4 nach unten gegen die Solarmodule 6 gerichtet ist.

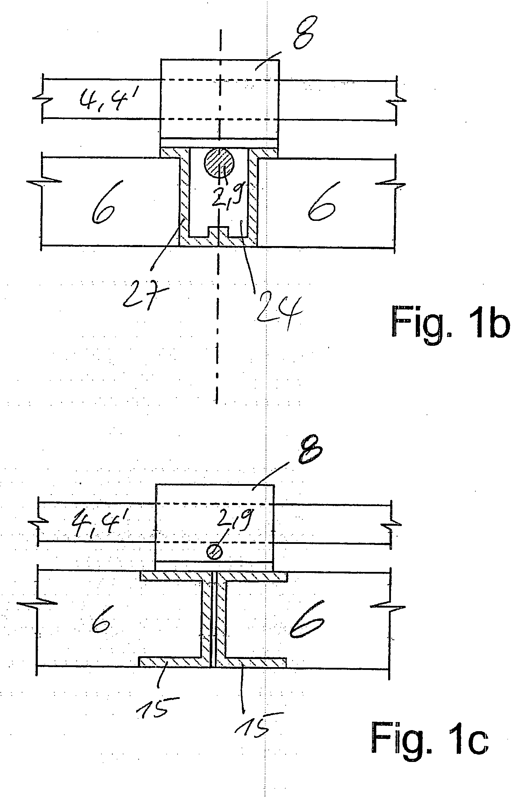

Die Figuren 1a und 2 zeigen, dass über die Länge des Sprührohres 4 verteilt, Zugseile an einerseits den Enden des Sprührohres 4 und andererseits an zwei Stellen am mittleren Bereich angreifen und zwar jeweils an Schlitten 8, mit denen das Sprührohr 4 - wie am besten in Figur 2 zu erkennen - schwerkraftbedingt auf der Oberseite der Solarmodule 6 aufliegt, und zwar auf deren Rahmen 15, wie im Detail in Figur 1c dargestellt, oder deren randseitigen Halterprofilen 27, wie in Figur 1 b dargestellt.

Dabei greifen nur an den endseitigen Schlitten 8 des Sprührohres 4 Zugseile 2 an, die in Gegenrichtung 20b abstreben, als auch Zugseile 9, die in Arbeitsrichtung 20a abstreben, also das Sprührohr 4 nach unten ziehen können.

An den Schlitten 8 im mittleren Bereich greifen dagegen nur Zugseile 2 an, die in Gegenrichtung 20b abstreben, also an denen das Sprührohr 4 lediglich einseitig aufgehängt ist.

Sämtliche Zugseile 2, 9 sind mit ihrem am Sprührohr 4 gegenüberliegenden Ende an einer Wickelwelle 1 befestigt und auf dieser aufwickelbar, die sich oberhalb der Oberkante der zu reinigenden Fläche horizontal verlaufend befindet und wesentlich kürzer ist als die Breite dieser Fläche.

Die Zugseile 2, 9 werden durch Umlenkrollen 3 zu dieser in der Mitte der zu reinigenden Fläche angeordneten Wickelwelle 1 hingeführt und abhängig davon, ob in Arbeitsrichtung 20a ziehende Zugseile 9 oder in Gegenrichtung 20b ziehende Zugseile sind, in einander entgegengerichtete Wickelrichtungen auf der Wickelwelle 1 aufgewickelt.

Die Umlenkrollen 3 sind dabei um Achsen drehbar, die lotrecht zur zu reinigenden Fläche und damit auch zu der von dem Sprührohr 4 bestrichenen Fläche stehen.

Auf der der Wickelwelle 1 gegenüberliegenden Seite der zu reinigenden Fläche befinden sich lediglich nahe außerhalb der unteren Ecken der zu reinigenden Fläche je eine Umlenkrolle 3 für das Zurückführen der vom Sprührohr 4 nach unten abstrebenden Zugseile 9 nach oben.

Somit befinden sich bis auf diese beiden unteren Umlenkrollen 3 sämtliche Teile der Antriebsvorrichtung 12 für das Sprührohr 4 oberhalb der zu reinigenden Fläche und können dort in einem Antriebsmodul sehr gut zusammengefasst werden.

Angetrieben wird die Wickelwelle 1 von einem nicht sichtbaren, in hohlen Inneren der Welle angeordneten Motor 13. Zusätzlich umfasst die Antriebsvorrichtung eine aus Spindel 10 und darauf laufender Spindelmutter 11 bestehende Verschiebevorrichtung, die die Wickelwelle 1 entlang ihrer Längsachse verschiebt, indem die Spindelmutter 11 ortsfest angeordnet ist und die Spindel 10 drehfest und axialfest mit der Wickelwelle 1 zusammen ausgebildet ist.

Durch Drehung der Wickelwelle 1 verschiebt sich die Spindel 10 und damit auch die Wickelwelle 1 relativ zur Spindelmutter 11 auch in axialer Richtung der Wickelwelle 1, wobei die Aufwickelrichtung der einzelnen Zugseile auf der Wickelwelle so gewählt ist, dass aufgrund dieser Längsverschiebung beim Drehen der Wickelwelle die Zugseile jeweils nur einlagig auf der Wickelwelle 1 aufgewickelt werden.

Ferner sind außerhalb der von den unteren Umlenkrollen 3 zurückreichenden Abschnitte der Zugseile 9 an diesen zurückführenden Teil außen anliegende Seitenführungen 7 in Form von Leisten oder Profilen ersichtlich, die diese zurückführenden Abschnitte der Zugseile 9 an einem seitlichen Ausbauchen hindern, wobei diese Seitenführungen und/oder analoge ergänzende Seitenführungen auch die endseitigen Schlitten 8 des Sprührohres 4 seitlich führen könnten.

Zum Reinigen der Fläche wird das Sprührohr beginnend von einer Position an der Oberkante der zu reinigenden Fläche aus nach unten in Gang gesetzt unter gleichzeitigem permanenten Ausbringen von Reinigungsfluid 25 auf die Fläche, so dass dieses austretende Reinigungsfluid auf den Solarmodulen 6 vorhandene Ablagerungen mit der Schwerkraft nach unten wäscht, unterstützt von den sich ebenfalls nach unten bewegendem Nachschub an Reinigungsfluid und nach unten mitwandernde Sprührohr 4, so dass die mit Staub und anderen Ablagerungen versetzte Reinigungsfluid 25 über die Unterkante der zu reinigenden Fläche abfließt bzw. abtropft und bei Bedarf dort aufgefangen, gereinigt und der Reinigungsanlage wieder zugeführt werden könnte.

In den Figuren 1c und 2 ist aus Übersichtlichkeitsgründen das Sprührohr 4 mit einem mit Reinigungsfluid 25 versorgenden Schlauch nicht bzw. nur rudimentär dargestellt, der vorzugsweise in keinem der Enden des Sprührohres 4 mündet und ausreichend lang und flexibel sein muss, um die Bewegung des Sprührohres mitvollziehen zu können.

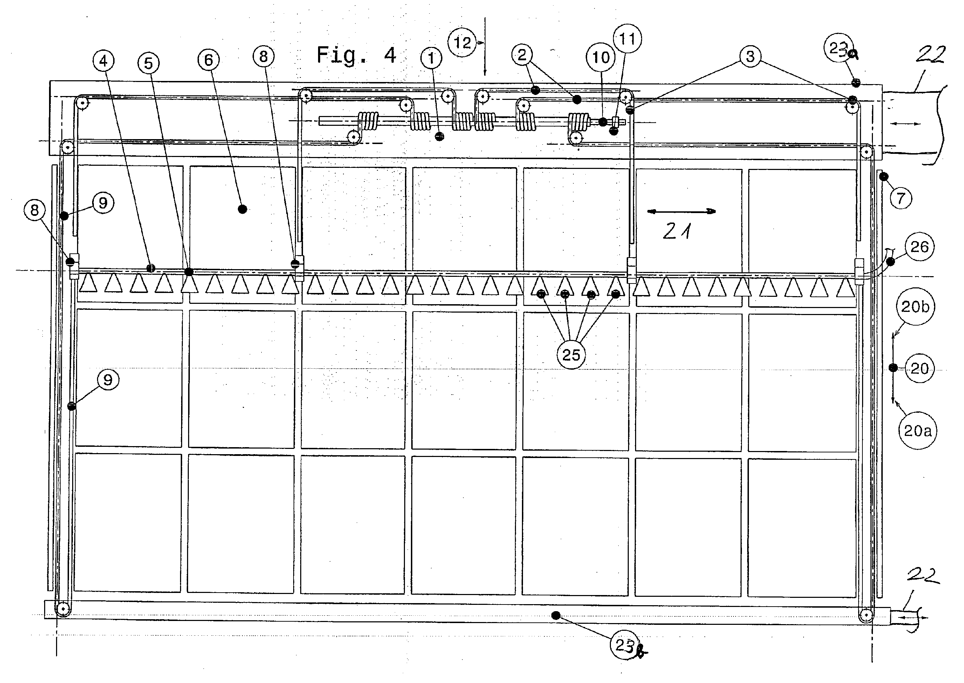

Figur 4 zeigt eine Lösung, die sich von derjenigen der Figuren 1a, 2 und 3 dadurch unterscheidet, dass die gesamte Reinigungsanlage in Querrichtung 21, also der horizontalen Richtung, der Verlaufsrichtung des Sprührohres 4, verfahren lässt, indem einerseits die Teile der Antriebseinrichtung oberhalb der Oberkante der zu reinigenden Fläche auf einem oberen Querschlitten 23a und die unteren beiden Umlenkrollen 3 auf einem unteren Querschlitten 23b montiert sind, die beide, insbesondere synchronisiert und motorisch angetrieben und gesteuert, entlang von oberhalb der Oberkante und unterhalb der Unterkante der Solarmodulfläche vorhandenen Querschienen 22 verfahrbar sind.

Dabei wird die Reinigungsanlage abschnittweise immer um die Breite der Reinigungsanlage, also die Länge des Sprührohres 4, seitlich verfahren und auf diese Art und Weise die einzelnen Breitenabschnitte der zu reinigenden gesamten Fläche nacheinander gereinigt.

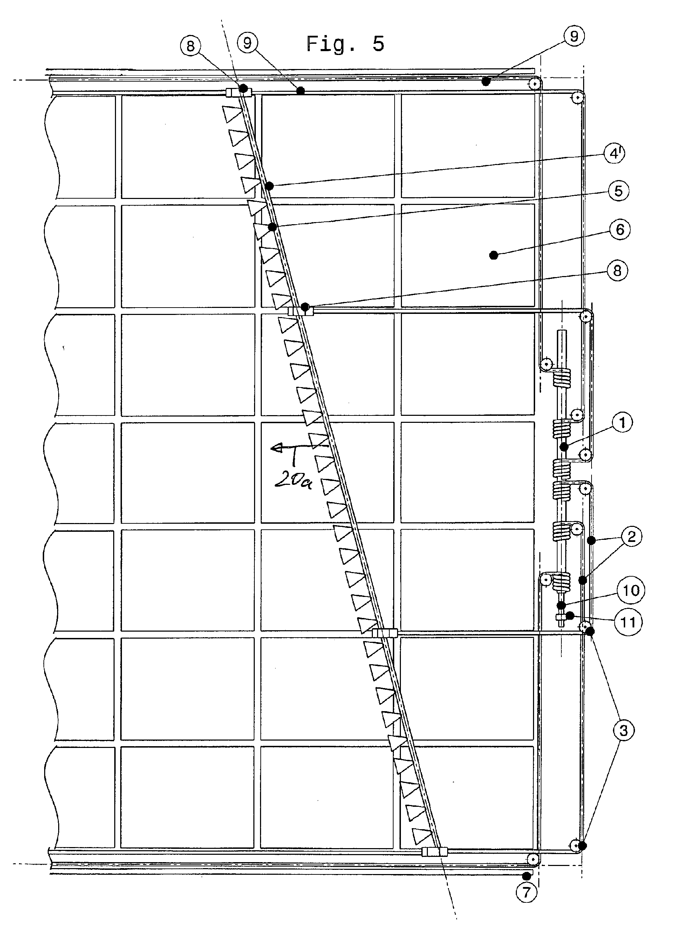

Figur 5 zeigt eine Lösung, die sich von derjenigen der Figuren 1a, 2 und 3 durch die andere Orientierung der Reinigungsanlage unterscheidet:

Das Arbeitsrohr 4' verläuft dabei nicht horizontal parallel zur Oberkante oder Unterkante der zu reinigenden Fläche und die Zugseile 2, 9 nicht von oben nach unten parallel zur Kantenrichtung der ansteigenden Seitenkanten der Fläche, sondern umgekehrt:

Die Zugseile 2, 9 verlaufen parallel zur Ober- und Unterkante der zu reinigenden Fläche und das Arbeitsrohr 4' bzw. Sprührohr 4 erstreckt sich von der Oberkante zur Unterkante hinweg über die zu reinigende Fläche, allerdings nicht im rechten Winkel zur Ober- und Unterkante, sondern hierzu schräg gestellt, so dass das in Arbeitsrichtung 20a weiter vorne liegende Ende des Arbeitsrohres 4' das obere Ende ist.

Dadurch wird ein nach unten waschen von Verunreinigungen auf der schrägen Fläche stark begünstigt.

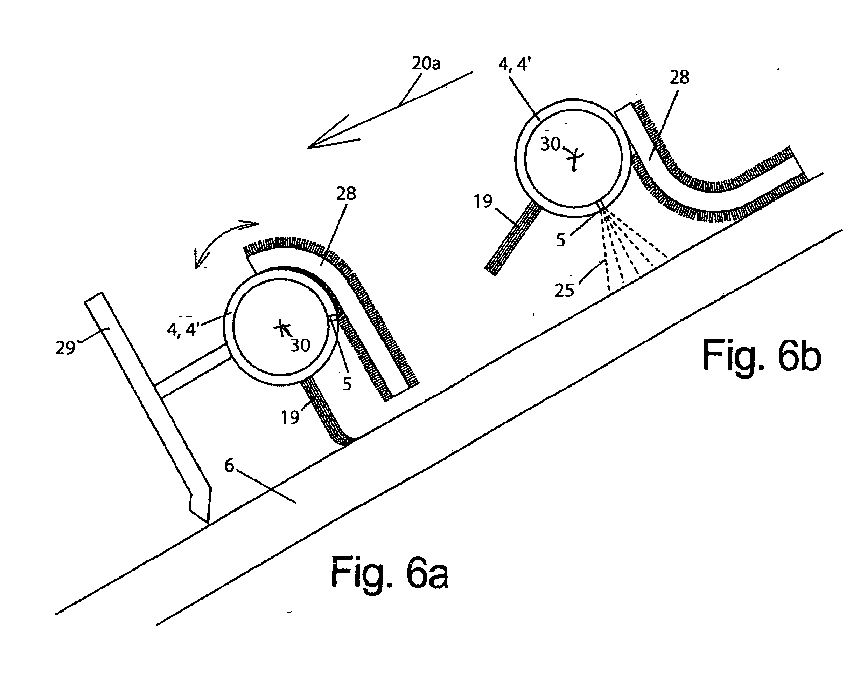

Die Figuren 6a und b zeigen in Detaildarstellung ein Arbeitsrohr 4', welches nicht nur ein Sprührohr 4 ist, sondern an dem weitere funktionale Bauteile befestigt sind.

Aus dem Arbeitsrohr 4' weisen in eine erste radiale Richtung für die Funktion als Sprührohr 4 Sprühdüsen 5 nach außen.

An anderen Radialpositionen sind auf dem Außenumfang des Arbeitsrohres 4' jedoch weitere funktionale Elemente wie etwa ein radial abstrebender Besen 19 oder ein tangential herabhängendes Wischtuch 28 angeordnet, oder über einen Abstandshalter ein etwa tangential zum Außenumfang des Arbeitsrohres 4 verlaufender Rakel 29, die sich jeweils über die gesamte Länge des Arbeitsrohres 4' erstrecken.

Indem das Arbeitsrohr 4' schwenkbar um eine Achse entweder parallel oder identisch zur seiner Rohr-Längsachse 30 ist und diese Elemente an entsprechenden radialen Positionen angeordnet sind, können sie wahlweise in Einsatz gebracht werden:

In Figur 6b sind die Sprühdüsen 5 gegen die zu reinigende Fläche, etwa das Solar-Modul 6, gerichtet.

In dieser Drehlage ist der in Arbeitsrichtung 20a weiter vorne befestigte Besen 19 mit seinen Borsten außer Kontakt der Modulfläche, während das weiter hinten am Umfang des Arbeitsrohres 4' befestigte Wischtuch 28 mit seinem hinteren Ende über die zu reinigende Fläche nachgezogen wird.

Bei einer Drehung um ca. 70° entgegen dem Uhrzeigersinn - wie in Figur 6a dargestellt - würde dagegen der Besen 19 auf der Oberfläche der Solarmodule 6 anliegen und ein Abkehren ermöglichen, dann vorzugsweise bei deaktivierten Sprühdüsen 5.

In dieser Position wäre auch das Wischtuch 28 soweit auf den Umfang des Arbeitsrohres 4' aufgewickelt, dass sein Ende die Solarmodule 6 nicht mehr berührt.

In der Figur 6a ist zusätzlich ein Rakel 29 an dem Arbeitsrohr 4' befestigt, der zum Entlangschieben größerer Verunreinigungsmengen benutzt werden kann.

Der Rakel 29 kann in einer solchen Lage montiert sein, dass er an der Fläche der Solarmodule 6 aufliegt, wenn auch der ebenfalls am Arbeitsrohr 4' befindliche Besen 19 dahinter die Fläche zusätzlich abkehrt, so dass in diesem Fall eine Grobreinigung durch den Rakel 29 und eine Feinreinigung durch den Besen 19 in einem Arbeitsschritt vollzogen würde.

Will man dies in getrennten Arbeitsschritten durchführen, würde der Rakel 29 um einen weiteren Winkelbetrag in Uhrzeigerrichtung versetzt gegenüber dem Besen angeordnet werden.

Nach dieser trockenen ein- oder zweistufigen Vorreinigung könnte dann in einem weiteren Schritt das Abwaschen der Fläche gemäß Figur 6b - wahlweise mit oder ohne nachgezogenem Wischtuch 28 - stattfinden.

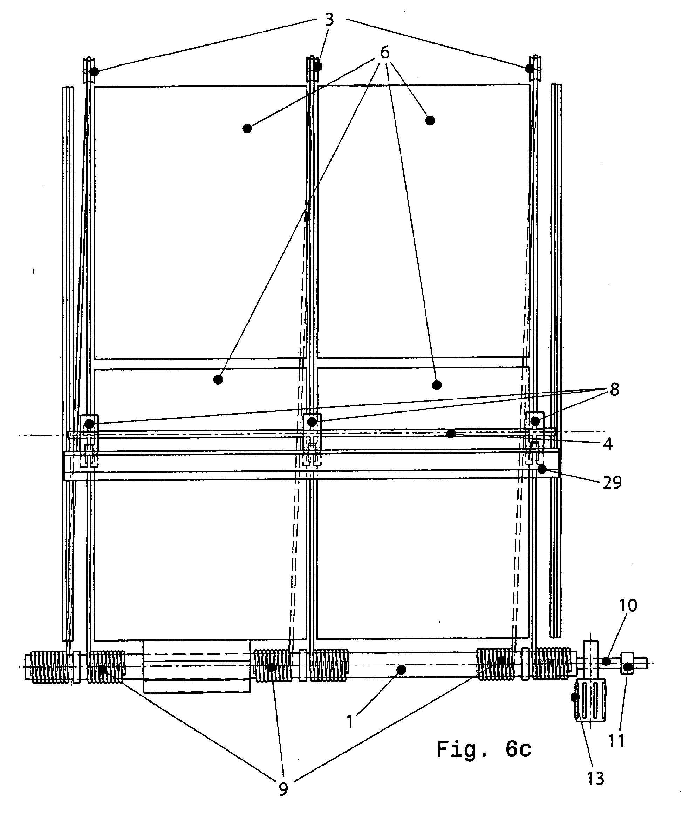

In Figur 6c ist eine Reinigungsanlage in der Aufsicht dargestellt, bei der das Arbeitsrohr 4' einen solchen Rakel 29 aufweist.

Aus der Darstellung der Figur 6c wird ferner deutlich, dass die Antriebsvorrichtung 12 mit Wickelwelle 1 nicht unbedingt oberhalb der Oberkante der zu reinigenden Fläche angeordnet sein muss, sondern auch nahe der Unterkante bzw. unterhalb der Unterkante angeordnet sein kann.

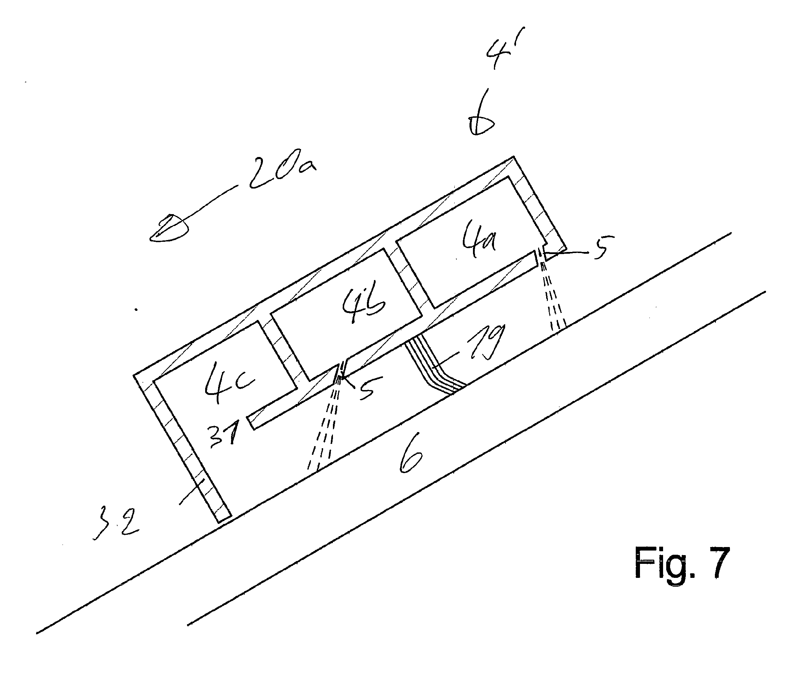

Zuletzt zeigt Figur 7 einen Querschnitt durch ein Arbeitsrohr 4', welches in diesem Fall nicht als Rundprofil sondern als Rechteckprofil ausgebildet ist und darüber hinaus im Querschnitt betrachtet mehrere voneinander getrennte Kammern 4a, b... aufweist.

Dabei können die Kammern zur Zuführung unterschiedlicher Reinigungsfluide benutzt werden:

So kann durch die in Arbeitsrichtung 20a hinterste Kammer 4a beispielsweise eine Reinigungsflüssigkeit zugeführt und durch entsprechende Sprühdüsen 5 ausgebracht werden, während in der anschließenden nächsten, davorliegenden Kammer 4b Druckluft als Reinigungsfluid zugeführt und ebenfalls wieder durch die gegen die Solarmodule 6 gerichteten Sprühdüsen 5 dieser Kammer 4b ausgebracht werden, in der Regel jedoch nicht gleichzeitig, sondern in verschiednen Arbeitsschritten nacheinander, da die Düsen der einzelnen Kammern separat schaltbar sind.

Dies empfiehlt sich insbesondere im Zusammenhang mit der Wirkung der vordersten Kammer 4c als mit Unterdruck beaufschlagte Kammer und damit eine Saugfunktion aufweisend, in dem die schräg nach unten in Arbeitsrichtung ausgebrachte Druckluft aus Kammer 4b Ablagerungen auf der Oberfläche der Solarmodule 6 in Form von Staub aufwirbelt und diese von der unmittelbar davor liegenden Kammer 4c und deren Saugschlitz 31 abgesaugt wird, was das erneute Ablagern auf der Oberfläche verhindert.

Um diesen Absaugeffekt zu verbessern, wird vorzugsweise die vorderste Stirnwand der vordersten Kammer 4c mit einer Verlängerung 32 ausgestattet, die möglichst knapp an die Solarmodule 6 heranreicht und gegebenenfalls dort mit einer Borstenkante oder Gummilippe sogar aufliegt.

Ergänzend kann an der Unterseite eines solchen Arbeitsrohres 4' wiederum ein weiteres funktionales Element, hier ein Besen 19, angeordnet sein.

### BEZUGSZEICHENLISTE

- 1: Wickelwelle
- 2: Zugseil Gegenrichtung
- 3: Umlenkrolle
- 4': Arbeitsrohr
- 4: Sprührohr
- 4a, b: Kammer
- 5: Sprühdüse
- 6: Solarmodul
- 7: Seitenführung
- 8: Schlitten
- 9: Zugseil Arbeitsrichtung
- 10: Spindel
- 11: Spindelmutter
- 12: Antriebsvorrichtung
- 13: Motor
- 15: Rahmen
- 18: Saugrohr
- 19: Besen
- 20: Bewegungsrichtung
- 20a: Arbeitsrichtung
- 20b: Gegenrichtung
- 21: Querrichtung
- 22: Querschiene
- 23a,b: Querschlitten
- 24: Fuge
- 25: Reinigungsfluid
- 26: Schlauch
- 27: Halterprofil
- 28: Wischtuch
- 29: Rakel
- 30: Rohrachse
- 31: Saugschlitz
- 32: Verlängerung

## Patentansprüche

1. Reinigungsanlage zum Reinigen einer insbesondere nicht horizontalen Arbeitsfläche, die aus Arbeitsflächenmodulen zusammengesetzt ist, insbesondere aus Solarmodulen (6), von Verunreinigungen wie Staub mit
- wenigstens einem über der Arbeitsfläche verlaufenden, entlang der Arbeitsfläche verfahrbaren, und die Arbeitsfläche überfahrenden Arbeitsrohr (4'), das ein Sprührohr (4) umfasst, mit
- gegen die zu reinigende Arbeitsfläche gerichteten Arbeitsöffnungen,
- einer Antriebsvorrichtung (12) zum Verfahren des Arbeitsrohres (4') entlang der Arbeitsfläche, wobei
- die in Bewegungsrichtung (20) des Arbeitsrohres (4') verlaufenden Teile der Antriebsvorrichtung (12) für das Arbeitsrohr (4'), die im Bereich der zu reinigenden Arbeitsfläche liegen, in der Aufsicht betrachtet
- entweder in den Fugen (24) zwischen den einzelnen Modulen (6) der Arbeitsfläche angeordnet sind,
- oder in der Aufsicht oberhalb der seitlichen aneinander stoßenden Rahmen (15) oder Einfassungen der einzelnen Module (6) der Arbeitsfläche,
- die Antriebsvorrichtung (12) an dem Arbeitsrohr (4') angreifende Zugelemente, insbesondere Zugseile (2, 9) umfasst, und nur auf einer Seite der Arbeitsfläche eine Wickelwelle (1) aufweist, die von einem Motor (13) angetrieben wird und auf der alle Zugseile (2, 9) aufgewickelt werden
- auf der der Wickelwelle (1) gegenüberliegenden Seite der Arbeitsfläche die Antriebsvorrichtung (12) lediglich Umlenkrollen (3) zum Zurückführen der Zugelemente, insbesondere Zugseile (2,9) aufweist, **dadurch gekennzeichnet, dass** - die Wickelwelle (1) kürzer ist als das Arbeitsrohr (4') und
- die Antriebsvorrichtung (12) eine Verschiebevorrichtung an der Seilbewicklung der Wickelwelle (1) umfasst, die für eine immer nur einlagige Bewicklung der Wickelwelle (1) mit den Zugelementen, insbesondere Zugseilen (2, 9) sorgt.

2. Reinigungsanlage nach Anspruch 1,
**dadurch gekennzeichnet, dass**
- die Verschiebevorrichtung aus einer feststehenden Spindelmutter (11) und einer darin axial verschraubbaren Spindel (10) besteht und insbesondere die Spindel (10) längsfest mit der Wickelwelle (1) verbunden ist, und/oder
- auf der Verschiebevorrichtung die jeweils letzten Umlenkrollen (3) befestigt sind, über welche die Zugseile (2, 9) auf die Wickelwelle (1) geführt werden.

3. Reinigungsanlage nach einem der vorhergehenden Ansprüche,
**dadurch gekennzeichnet, dass**
- die Zugseile (2, 9) an den Enden des Arbeitsrohres (4') in und gegen die Arbeitsrichtung (20a) weisend angreifen, die jedoch vorzugsweise außerhalb der zu reinigenden Arbeitsfläche, also der Arbeitsfläche des Arbeitsrohres (4'), verlaufen, und/oder
- außerhalb der Arbeitsfläche und der Enden des Arbeitsrohres (4') in Bewegungsrichtung (20) verlaufende Seitenführungen (7) für das Arbeitsrohr (4') oder die von der gegenüberliegenden Seite zur Wickelwelle (1) zurückgeführten Zugseile (9) angeordnet sind.

4. Reinigungsanlage nach einem der vorhergehenden Ansprüche,
**dadurch gekennzeichnet, dass**
- im Bereich zwischen den Enden des Arbeitsrohres (4') an diesem Zugseile (2) angreifen, die nur nach oben entlang der Arbeitsfläche abstreben, und/oder
- die Wickelwelle (1) außerhalb der Oberkante der Arbeitsfläche des Arbeitsrohres (4') angeordnet ist und sich in der Aufsicht betrachtet insbesondere in der Mitte der Breite der Arbeitsfläche befindet.

5. Reinigungsanlage nach einem der vorhergehenden Ansprüche,
**dadurch gekennzeichnet, dass**
- die nur nach oben weisenden Zugseile (2) an Schlitten (8) angreifen, die am Arbeitsrohr (4') angeordnet sind und mit denen das Arbeitsrohr (4') auf der Oberseite der zu reinigenden Arbeitsfläche aufliegt, insbesondere gleitet oder rollt, und/oder
- die Schlitten (8) auch an den seitlichen Endes des Arbeitsrohres (4') angeordnet sind.

6. Reinigungsanlage nach einem der vorhergehenden Ansprüche, wobei das Arbeitsrohr (4') sich von der Oberkante zur unterkante über die zu reinigende fläche beinweg erstreckt
**dadurch gekennzeichnet, dass**
- das Arbeitsrohr (4') im rechten Winkel zur Bewegungsrichtung (20) des Arbeitsrohres (4') verläuft, oder
- das Arbeitsrohr (4') in der Aufsicht betrachtet schräg gestellt mit dem höher liegenden Ende in Arbeitsrichtung (20a) weiter vorne liegend als das niedriger liegende Ende angeordnet ist, und insbesondere
- der Schrägstellungswinkel gegenüber der Querrichtung (21) zur Bewegungsrichtung mindestens 5°, besser mindestens 10°, besser mindestens 20°, besser mindestens 30°, beträgt.

7. Reinigungsanlage nach einem der vorhergehenden Ansprüche,
**dadurch gekennzeichnet, dass**
- nur am oberen und unteren Ende des Arbeitsrohres (4') Zugseile (2, 9) angreifen, dort jedoch in und gegen die Arbeitsrichtung (20a) weisend, und/oder
- der Motor (13) ein in der Wickelwelle (1) angeordneter Rohrmotor ist, der drehfest und axialfest mit der hohlen Wickelwelle (1) verbunden ist.

8. Reinigungsanlage nach einem der vorhergehenden Ansprüche,
**dadurch gekennzeichnet, dass**
- ein flexibler Versorgungsschlauch außerhalb der Arbeitsfläche zu wenigstens einem Ende des Arbeitsrohres (4') herangeführt ist, und/oder
- die Antriebsvorrichtung (12) eine Parkposition für das Arbeitsrohr (4') außerhalb der Arbeitsfläche umfasst, die vorzugsweise nahe an der Wickelwelle (1) angeordnet ist, in der das Arbeitsrohr (4') in über seine Länge verteilten formschlüssigen, U-förmigen Parkaufnahmen gehalten wird.

9. Reinigungsanlage nach einem der vorhergehenden Ansprüche,
**dadurch gekennzeichnet, dass**
- außerhalb der Arbeitsfläche ein Schutzgehäuse zur Aufnahme von Wickelwelle (1), Motor (13) sowie des Arbeitsrohres (4') in der Parkposition vorhanden ist, und/oder
- das Arbeitsrohr (4') ein Sprührohr (4) ist mit insbesondere Sprühdüsen (5) in ' den Arbeitsöffnungen, aus denen ein Reinigungsfluid, wie etwa Wasser oder ein Reinigungsgas, insbesondere Regenwasser oder entkalktes Wasser, ausströmt und mit Druck schräg nach unten gegen die zu reinigende Arbeitsfläche gerichtet ist.

10. Reinigungsanlage nach einem der vorhergehenden Ansprüche,
**dadurch gekennzeichnet, dass**
- die Sprühdüsen (5) Fächerdüsen sind, die in regelmäßigen Abständen entlang des Sprührohres (4) angeordnet sind, und/oder
- als Reinigungsgas Kohlendioxid verwendet wird.

11. Reinigungsanlage nach einem der vorhergehenden Ansprüche,
**dadurch gekennzeichnet, dass**
- als Reinigungsfluid ein unter die Umgebungstemperatur abgekühltes Fluid verwendet wird, und/oder
- als Reinigungsfluid Druckluft verwendet wird.

12. Reinigungsanlage nach einem der vorhergehenden Ansprüche,
**dadurch gekennzeichnet, dass**
- in Arbeitsrichtung vor dem Sprührohr (4) ein Saugrohr (18) angeordnet ist mit einem schlitzförmigen, entlang des Rohres verlaufenden und gegen die zu reinigende Arbeitsfläche gerichteten Saugschlitz, welches mittels Unterdruck beaufschlagt ist und auf der zu reinigenden Arbeitsfläche abgelagerten Staub absaugt, der insbesondere vom Sprührohr (4) mittels Druckluft aufgewirbelt wurde, und insbesondere
- Sprührohr (4) und Saugrohr (18) in einem Arbeitsrohr (4') vereinigt sein können in Form nebeneinander liegender hohler Kammern (4a, b..).

13. Reinigungsanlage nach einem der vorhergehenden Ansprüche,
**dadurch gekennzeichnet, dass**
- das Sprührohr (4) mehrere nebeneinander liegende, in Längsrichtung verlaufende Kammern (4a, b) aufweist, die jeweils Austrittsöffnungen zur zu reinigenden Arbeitsfläche hin aufweisen und der Zuführung unterschiedlicher Reinigungsfluide dienen, und/oder
- dem Reinigungsfluid bewuchshemmende Stoffe zugesetzt sind.

14. Reinigungsanlage nach einem der vorhergehenden Ansprüche,
**dadurch gekennzeichnet, dass**
- am Arbeitsrohr (4') oder insbesondere in Arbeitsrichtung (20a) vor dem Arbeitsrohr (4') ein sich über die Länge des Arbeitsrohres (4') erstreckender Besen (19) erstreckt, und insbesondere
- das Arbeitsrohr (4') um seine Längsachse schwenkbar ist in unterschiedliche Arbeitspositionen, in denen in einer Arbeitsposition der Besen (19) auf der zu reinigenden Arbeitsfläche aufliegt und in den anderen Arbeitspositionen die jeweils unterschiedlichen Arbeitsöffnungen des Arbeitsrohres (4') auf die Arbeitsfläche gerichtet sind.

15. Reinigungsanlage nach einem der vorhergehenden Ansprüche,
**dadurch gekennzeichnet, dass**
- das Zugelement ein Versorgungsschlauch ist, welcher das das Sprührohr (4), mit Reinigungsfluid versorgt und/oder
- der Versorgungsschlauch auf die Wickelwelle (1) einlagig aufgewickelt wird und an dem Arbeitsrohr sowohl in als auch gegen die Arbeitsrichtung (20a) abstrebend angreift, und/oder
- die Reinigungsanlage auf Querschienen (22), die quer zur Bewegungsrichtung (20) des Arbeitsrohres (4') außerhalb der zu reinigenden Arbeitsfläche angeordnet sind, verfahrbar ist, indem die Wickelwelle (1) mit dem Motor (13) und den auf dieser Seite der Arbeitsfläche liegenden Umlenkrollen (3) einerseits sowie die auf der anderen Seite der Arbeitsfläche liegenden Umlenkrollen (3) andererseits auf jeweils einem, entlang je einer der Querschienen (22) verfahrbaren, Querschlitten (23) montiert sind.

16. Verfahren zum Betreiben einer Reinigungsanlage nach einem der vorhergehenden Ansprüche, wobei
- in einem ersten Arbeitsschritt mittels eines am Arbeitsrohr (4') befestigten Besens (19) die Arbeitsfläche abgekehrt wird,
- nach Abheben des Besens (19) und Zurückverfahren des Arbeitsohres in die Ausgangslage in einem weiteren Schritt die zu reinigenden Arbeitsfläche durch Aufsprühen eines Reinigungsfluides gewaschen wird
**dadurch gekennzeichnet, dass**
mittels des Arbeitsrohres (4') von der zu reinigenden Arbeitsfläche Staub mittels Unterdruck abgesaugt wird, entweder anstelle des Abkehrens als erster Reinigungsschritt oder zwischen dem Abkehren und dem Besprühen als Zwischenschritt.

17. Verfahren nach Anspruch 16,
**dadurch gekennzeichnet, dass**
zum Waschen als Reinigungsfluid Druckluft ausgebracht wird und der dadurch aufgewirbelte Staub in Arbeitsrichtung vor dem Sprührohr (4) von einem Saugrohr (18) abgesaugt wird.

## Claims

1. A cleaning system for cleaning an operating surface that is in particular not horizontal, wherein the operating surface is assembled from operating surface modules, in particular from solar modules (6), wherein contaminations like dust are being cleaned off, comprising
- at least one operating tube (4') extending over the operating surface, movable along the operating surface, running over the operating surface, implemented as a spray tube (4), and including
- operating openings oriented against the operating surface to be cleaned,
- a drive (12) for moving the operating tube (4') along the operating surface,
- wherein components of the drive (12) for the operating tube (4') extending in movement direction (20) of the operating tube (4') which are arranged in the portion of the operating surface to be cleaned in a top view
- are either arranged in grooves (24) between the particular modules (6) of the operating surface,
- or in top view above the laterally adjoining frames (15) or enclosures of the particular modules (6) of the operating surface,
- wherein the drive (12) includes pull elements engaging the operating tube (4'), in particular pull cables (2, 9) and only includes a winding shaft (1) on one side of the operating surface, wherein the winding shaft is driven by a motor (13) and on which all pull cables (2, 9) are wound up,
- wherein the winding shaft (1) is shorter than the operating tube (4'),
- wherein the drive (12) only includes pulley rollers (3) for reversing the pull elements, in particular pull cables (2, 9) on a side of the operating surface which is opposite to the winding shaft (1), and
- wherein the drive (12) includes a movement device at the winding apparatus of the winding shaft (1), wherein the winding apparatus provides a one-layer windup of the winding shaft (1) with the pull elements, in particular the pull cables (2, 9).

2. The cleaning system according to claim 1,
- wherein the movement device includes a stationary spindle nut (11) and a spindle (10) that is axially threadable in the spindle nut and in particular wherein the spindle (10) is longitudinally fixated at the winding shaft (1), and/or
- wherein the respective last pulley rollers (3) are attached on the movement device, wherein the pull cables (2, 9) are run over the pulley rollers onto the winding shaft (1).

3. The cleaning system according to one of the preceding claims,
- wherein the pull cables (2, 9) engage the ends of the operating tube (4') in and against the operating direction (20a), wherein the pull cables, however, preferably extend outside of the operating surface to be cleaned, thus outside of the operating surface of the operating tube (4'), and/or
- lateral guides (7) extending in movement direction (20) for the operating tube (4') or for the pull cables (9) that are run back from the opposite side to the winding shaft (1) are arranged outside of the operating surface and outside of the ends of the operating tube (4').

4. The cleaning system according to one of the preceding claims,
- wherein pull cables (2) engage the operating pipe (4') in a portion between its ends, wherein the pull cables only extend from the operating tube in upward direction along the operating surface, and/or
- wherein the winding shaft (1) is arranged outside of the upper edge of the operating of the operating tube (4') and arranged in top view in particular in a center of a width of the operating surface.

5. The cleaning system according to one of the preceding claims,
- wherein the pull cables (2) that are only oriented in upward direction engage slides (8) which are arranged at the operating tube (4') and through which the operating tube (4') contacts a top side of the operating surface to be cleaned, in particular contacts the top side of the operating surface in a sliding or rolling manner, and/or
- wherein the slides (8) are also arranged at lateral ends of the operating tube (4').

6. The cleaning system according to one of the preceding claims,
- wherein the operating tube (4') extends from an upper edge to a lower edge over the surface to be cleaned,
- wherein the operating tube (4') extends at a right angle to a movement direction (20) of the operating tube (4'), or
- wherein the operating tube (4') in top view is placed at a slant angle with the higher end further forward in operating direction (20a) than the lower end, and in particular
- wherein the slant angle relative to the transversal direction (21) is at least 5°, better at least 10°, better at least 20°, better at least 30°.

7. The cleaning system according to one of the preceding claims,
- wherein pull cables (2, 9) engage only at the upper end and at the lower end of the operating tube (4'), at this location, however, the pull cables are oriented in operating direction (20a) and against the operating direction (20a), and/or
- wherein the motor (13) is a tube motor that is arranged in the winding shaft (1) and connected torque proof and axially fixated with the hollow winding shaft (1).

8. The cleaning system according to one of the preceding claims,
- wherein a flexible supply hose is run outside of the operating surface to at least one end of the operating tube (4'), and/or
- wherein the drive (12) includes a parking position for the operating tube (4') outside of the operating surface, wherein the parking position is preferably arranged proximal to the winding shaft (1) and the operating tube (4') is supported in the parking position in form locking U-shaped parking receivers distributed over its length.

9. The cleaning system according to one of the preceding claims,
- wherein a protective housing is provided outside of the operating surface for receiving the winding shaft (1), the motor (3) and the operating tube (4') in the parking position and/or
- the operating tube (4') is a spray tube (4), in particular with spray nozzles (5) in the operating openings from which spray nozzles a cleaning fluid like for example water or a cleaning gas, in particular rain water or decalcified water flows out and is directed with pressure at a downward slant angle against the operating surface to be cleaned.

10. The cleaning system according to one of the preceding claims,
- wherein the spray nozzles (5) are fan nozzles which are arranged at even distances along the spray tube (4) and/or
- wherein carbon dioxide is used as a purging gas.

11. The cleaning system according to one of the preceding claims,
- wherein a fluid that is cooled below ambient temperature is used as a purging fluid and/or
- wherein compressed air is used as a purging fluid.

12. The cleaning system according to one of the preceding claims,
- wherein a suction tube (18) is arranged in operating direction in front of the spray tube (4), wherein the suction tube includes a suction slot that is slot shaped and extends along the tube and which is oriented against the operating surface to be cleaned, wherein the suction tube is loaded with vacuum and sucks up dust that has accumulated on the operating surface to be cleaned, wherein the dust was stirred up in particular by the spray tube (4) through compressed air, and in particular
- wherein the spray tube (4) and the suction tube (18) are combinable in an operating tube (4') as hollow chambers (4a. b...) arranged adjacent to one another.

13. The cleaning system according to one of the preceding claims,
- wherein the spray tube (4) includes plural chambers (4a, b) arranged adjacent to one another and extending in longitudinal direction, wherein the chambers respectively include outlet openings towards the operating surface to be cleaned and are used for providing different purging fluids, and/or
- wherein growth inhibiting materials are added to the purging fluid.

14. The cleaning system according to one of the preceding claims,
- wherein a broom (19) that extends over the length of the operating tube (4') is arranged at the operating tube (4') or in particular in operating direction (20a) in front of the operating tube (4'), and in particular
- wherein the operating tube (4') is pivotable about its longitudinal axis and pivotable in particular operating positions in which the broom (19) contacts the operating surface to be cleaned in one operating position and the respective different operating openings of the operating tube (4') are directed to the operating surface in the other operating positions.

15. The cleaning system according to one of the preceding claims,
- wherein the pull element is a supply hose which provides the spray tube (4) with the purging fluid and/or
- wherein the supply hose is wound in one layer onto the winding shaft (1) and engages the operating tube in operating direction (20a) and against the operating direction (20a) and/or
- wherein the cleaning system is movable on transversal rails (22) which are arranged transversal to the movement direction (20) of the operating tube (4') outside of the operating surface to be cleaned in that the winding shaft (1) with the motor (13) and the pulley rollers (3) arranged on this side of the operating surface on the one hand side and the pulley rollers (3) arranged on the other side of the operating surface on the other hand side are mounted on a respective transversal slide (23) that is movable along one of the transversal rails (22).

16. A method for operating a cleaning system according to one of the preceding claims,
- wherein the operating surface is swept clean in a first operating step through a broom (19) attached at the operating tube (4'),
- wherein the operating surface to be cleaned is washed through spraying on a purging fluid after lifting off the broom (19) and moving the operating tube back into a starting position in an additional step,
- wherein dust is sucked up through vacuum through the operating tube (4') from the operating surface to be cleaned, either instead of the sweeping as a first cleaning step, or between sweeping and spraying as an intermediary step.

17. The method according to claim 16,
- wherein compressed air is expelled as a purging fluid for washing and the dust thus stirred up is sucked up in operating direction in front of the spray tube (4) by a suction tube (18).

## Revendications

1. Installation pour le nettoyage d'une surface de travail en particulier non horizontale qui se compose de modules de surfaces de travail, en particulier de modules solaires (6), d'impuretés en particulier de poussière, comprenant
- au moins un tube de travail (4') s'étendant sur la surface de travail, mobile le long de la surface de travail et passant sur la surface de travail, tube qui comporte un tube de pulvérisation (4), comprenant
- des ouvertures de travail dirigées en direction de la surface de travail à nettoyer,
- un dispositif de travail (12) pour le procédé du tube de travail (4') le long de la surface de de travail,
- les parties du dispositif de travail s'étendant dans la direction de mouvement (20) du dispositif d'entraînement (12) pour le tube de travail (4') qui se trouve dans la zone de la surface de travail à nettoyer, observé en vue de dessus
- sont disposés soit dans les joints (24) entre chacun des modules (6) de la surface de travail,
- soit en vue de dessus au-dessus des cadres (15) latéraux jointifs ou dans des châssis de chacun des modules (6) de la surface de travail,
- le dispositif d'entraînement (12) comprenant des éléments de traction agissant sur le tube de travail (4'), en particulier des câbles de traction (2, 9) et seulement sur une face de la surface de travail présentant un arbre d'enroulement (1) qui est entraîner par un moteur (13) et sur lequel sont enroulés tous les câbles de traction (2, 9),
- l'arbre d'enroulement (1) étant plus court que le tube de travail (4') et
- sur la face opposée à l'arbre d'enroulement (1) de la surface de travail, le dispositif d'entraînement (12) présentant simplement les poulies de renvoi (3) pour le retour des éléments de traction, en particulier des câbles de traction (2, 9), **caractérisée en ce que**
- le dispositif de travail (12) comprend un dispositif de déplacement sur l'enroulement de câble de l'arbre d'enroulement (1) qui assure toujours un enroulement uniquement sur une couche de l'arbre d'enroulement (1) avec les éléments de traction en particulier des câbles de traction (2, 9).

2. Installation de nettoyage selon la revendication 1, **caractérisée en ce que**
- le dispositif de déplacement se compose d'un écrou de broche fixe (11) et d'une broche (10) vissable axialement et en particulier la broche (10) est reliée longitudinalement à l'arbre
d'enroulement (1), et/ou
- les dernières poulies de renvoi (3) sont fixées sur le dispositif de déplacement, par lesquelles les câbles de traction (2, 9) sont guidées sur les arbres d'enroulement (1).

3. Installation de nettoyage selon l'une des revendications précédentes, **caractérisée en ce que**
- les câbles de traction (2, 9) s'engagent aux extrémités du tube de travail (4') dans et à l'encontre de la direction de travail (20a) et s'étendent cependant de préférence à l'extérieur de la surface de travail à nettoyer donc de la surface de travail du tube de travail (4'), et/ou
- des guidages latéraux (7) s'étendant dans la direction de mouvement (20) pour le tube de travail (4') et les câbles de traction (9) du côté opposé ramenés à l'arbre d'enroulement (1) sont disposés à l'extérieur de la surface de travail et des extrémités du tube de travail (4').

4. Installation de nettoyage selon l'une des revendications précédentes, **caractérisée en ce que**
- dans la zone entre les extrémités du tube de travail (4') s'engagent des câbles de traction (2) qui ne font saillie que vers le haut et/ou le long de la surface de travail, et/ou
- l'arbre d'enroulement (1) est disposé à l'extérieur du bord supérieur de la surface de travail du tube de travail (4') et se trouve, observé en vue de dessus, en particulier au milieu de la largeur de la surface de travail.

5. Installation de nettoyage selon l'une des revendications précédentes, **caractérisée en ce que**
- les câbles de traction (2) uniquement dirigés vers le haut s'appliquent contre des chariots (8) qui sont disposés sur le tube de travail (4') et par lesquels le tube de travail (4') repose, glisse ou roule sur la face supérieure de la surface de travail à nettoyer, en particulier, et/ou
- les patins (8) sont disposés également sur les extrémités latérales du tube de travail (4').

6. Installation de nettoyage selon l'une des revendications précédentes, **caractérisée en ce que**
- le tube de travail (4') s'étend en angle droit à la direction de mouvement (20) du tube de travail (4'), ou
- le tube de travail (4') observé en vue de dessus est disposé en oblique avec l'extrémité supérieure dans la direction de travail (20a) plus loin vers l'avant que l'extrémité se trouvant plus bas, et en particulier
- l'angle de position oblique est par rapport à la direction transversale (21) vers la direction de déplacement au moins 5°, au mieux au moins 10°, au mieux au moins 20°, au mieux au moins 30°.

7. Installation de nettoyage selon l'une des revendications précédentes, **caractérisée en ce que**
- seulement sur l'extrémité supérieure et inférieure du tube de travail (4'), viennent s'appliquer des câbles de traction (2, 9), cependant dirigés dans la direction et à l'encontre de la direction de travail (20a), et/ou
- le moteur (13) est un moteur tubulaire disposé sur l'arbre d'enroulement (1), qui est relié fixe en rotation et axialement fixe à l'arbre d'enroulement creux (1).

8. Installation de nettoyage selon l'une des revendications précédentes, **caractérisée en ce que**
- un tuyau flexible d'alimentation est guidé à l'extérieur de la surface de travail en direction d'au moins une extrémité du tube de travail (4'), et/ou
- le dispositif d'entraînement (12) comprend une position de garage pour le tube de travail (4') à l'extérieur de la surface de travail qui est disposée de préférence proche de l'arbre d'enroulement (1) position dans laquelle est maintenu le tube de travail (4') dans des logements de parking répartis en forme de U, sur sa longueur par adhérence de forme.

9. Installation de nettoyage selon l'une des revendications précédentes, **caractérisée en ce qu'**
- à l'extérieur de la surface de travail, il est prévu un carter de protection pour le logement de l'arbre d'enrouement (1), du moteur (13) ainsi que du tube de travail (4') dans la position de parking, et/ou
- le tube de travail (4') est un tube de pulvérisation (4) avec en particulier des buses de pulvérisation (5) dans les ouvertures de travail, d'où s'écoule un fluide de nettoyage tel que l'eau ou un gaz de nettoyage, en particulier de l'eau de pluie ou de l'eau filtrée et est dirigé sous pression inclinée vers le bas en direction de la surface de travail à nettoyer.

10. Installation de nettoyage selon l'une des revendications précédentes, **caractérisée en ce que**
- les buses de pulvérisation (5) sont des buses à jets plats qui sont disposées à intervalles réguliers le long du tube de pulvérisation (4) et/ou
- en tant que gaz de nettoyage, on utilise du dioxyde de carbone.

11. Installation de nettoyage selon l'une des revendications précédentes, **caractérisée en ce que**
- en tant que fluide de nettoyage, on utilise un fluide refroidi en dessous de la température ambiante, et/ou
- en tant que fluide de nettoyage, on utilise de l'air comprimé.

12. Installation de nettoyage selon l'une des revendications précédentes, **caractérisée en ce que**
- dans la direction de travail, il est disposé devant le tube de pulvérisation (4) un tube d'aspiration (18) avec une fente d'aspiration en forme de fente, s'étendant le long du tube et dirigé en direction de la surface de travail à nettoyer, tube qui subit une dépression et qui aspire la poussière déposée sur la surface de travail à nettoyer, qui a été soulevée en particulier par le tube de pulvérisation (4) au moyen de l'air comprimé, et en particulier,
- le tube de pulvérisation (4) et le tube d'aspiration (18) peuvent être réunis dans un tube de travail (4') sous forme de cavités creuses (4a, b...) se trouvant les unes à côté des autres.

13. Installation de nettoyage selon l'une des revendications précédentes, **caractérisée en ce que**
- le tube de pulvérisation (4) présente plusieurs cavités (4a, b) s'étendant dans la direction longitudinale se trouvant les unes à côté des autres, qui présentent respectivement des ouvertures de sortie dirigées en direction de la surface de travail à nettoyer et qui servent à l'amenée de différents fluides de nettoyage, et/ou
- des substances antisalissure sont mélangées au fluide de nettoyage.

14. Installation de nettoyage selon l'une des revendications précédentes, **caractérisée en ce que**
- un balai (19) s'étend sur le tube de travail (4') ou en particulier dans la direction de travail (20a) devant le tube de travail (4') sur la longueur du tube de travail (4'), et en particulier
- le tube de travail (4') est pivotant autour de son axe longitudinal dans différentes positions de travail dans lesquelles dans une position de travail, le balai (19) est appliqué sur la surface de travail à nettoyer et dans les autres positions de travail, les différentes ouvertures de travail du tube de travail (4') sont dirigées vers la surface de travail.

15. Installation de nettoyage selon l'une des revendications précédentes, **caractérisée en ce que**
- l'élément de traction est un tuyau flexible d'alimentation qui alimente le tube de pulvérisation (4) en fluide de nettoyage et/ou
- le tuyau flexible d'alimentation est enroulé en une couche sur l'arbre d'enroulement (1) et s'applique sur le tube de travail aussi bien dans la direction qu'à l'encontre de la direction de travail (20a) en faisant saillie, et/ou
- l'installation de nettoyage est mobile sur des rails transversaux (22) qui sont disposés transversalement à la direction de déplacement (20) du tube de travail (4') à l'extérieur de la surface de travail à nettoyer, dans le fait que l'arbre d'enroulement (1) avec le moteur (13) et les poulies de renvoi (3) se trouvant sur cette face de la surface de travail, d'une part ainsi que les poulies de renvoi (3) se trouvant de l'autre côté de la surface de travail d'autre part sont montés sur respectivement un patin transversal (23) mobile le long d'un des rails transversaux(22).

16. Installation de nettoyage selon l'une des revendications précédentes, **caractérisée en ce que**
- dans une première étape de travail au moyen d'un balai (19) fixé sur le tube de travail (4'), la surface de travail est balayée,
- après soulèvement du balai (19) et le retour du tube de travail en position de départ, dans une étape suivante, la surface de travail à nettoyer est lavée par pulvérisation d'un fluide de nettoyage,
**caractérisée en ce qu'**
au moyen du tube de travail (4'), la poussière est aspirée de la surface de travail à nettoyer par dépression, soit à la place du balayage en tant que première étape de nettoyage ou entre le balayage et la pulvérisation en tant qu'étape intermédiaire.

17. Procédé selon la revendication 16, **caractérisé en ce que** pour le lavage, on utilise en tant que fluide de nettoyage de l'air comprimé et la poussière ainsi soulevée est aspirée dans la direction de travail devant le tube de pulvérisation (4) par un tube d'aspiration (18).
